# DEMANDE DE BREVET EUROPEEN

(11) **EP 2 225 941 A1**
(43) Date de publication de la demande: **08.09.2010**
(21) Numéro de dépôt: 10154325.4
(22) Date de dépôt: 23.02.2010
(51) Int. Cl.: A21B 3/13, A47J 43/20

(54) **Contour de moule alimentaire**

(30) Priorité: 05.03.2009 FR 0901004
(71) Demandeur: Productions Mallard Ferrière PMF, 93130 Noisy le Sec (FR)
(72) Inventeur: Ferriere, Michel, 27640, Breuilpont (FR)
(74) Mandataire: Jaunez, Xavier

(57) **Abrégé**

L'invention concerne un contour de moule (1) destiné à être apposé sur une plaque culinaire (2) pour retenir un produit alimentaire disposé sur cette plaque à l'intérieur du contour (1).

Le contour est constitué par un barreau souple (1) comprenant un corps (3) en silicone alimentaire renfermant une âme (6) en un matériau plastiquement déformable permettant de donner à ce barreau souple (1) une courbure souhaitée, l'âme (6) dudit corps ayant une forme de barre ou de fil.

L'invention s'applique au domaine des préparations de pâtisserie

## Description

L'invention concerne un contour de moule destiné à être apposé sur une plaque culinaire telle qu'une plaque de cuisson pour retenir un produit alimentaire déposé sur cette plaque à l'intérieur du contour.

### ARRIERE PLAN DE L'INVENTION

Un tel contour de moule est typiquement utilisé en pâtisserie pour réaliser des pièces ayant des formes originales à surface de base généralement plane, lisse ou gaufrée, et répondant typiquement à des commandes spécifiques, la forme à obtenir étant le plus souvent différente d'une commande à une autre.

Dans ce cadre, le pâtissier réalise un moule en utilisant une plaque de cuisson sur laquelle il appose un ou des éléments de contour de moule, en les fixant éventuellement à cette plaque, de manière à constituer un contour fermé délimitant la pièce de pâtisserie qu'il a à réaliser.

Cette opération étant terminée, le pâtissier dépose un produit alimentaire, sur la plaque et à l'intérieur du contour avant de laisser refroidir l'ensemble ou d'installer l'ensemble dans un four. Ce produit alimentaire peut se présenter sous forme pâteuse ou liquide, il peut s'agir de sucre, de chocolat fondant, de pâte à génoise ou à biscuit. Après cuisson ou refroidissement, le contour est retiré pour détacher ensuite la pièce cuite de la plaque.

Dans ce cadre, le document US 3 530 540 A enseigne d'utiliser des éléments de contour qui sont aimantés, pour se fixer à une plaque de cuisson métallique. Cette solution implique néanmoins de disposer d'une grande quantité d'éléments de contour pour pouvoir réaliser une grande quantité de formes différentes.

Une solution analogue est illustrée dans le document US 4 156 516 A, avec un contour de moulage ayant une âme qui est soit en forme de plaque ou de ruban recouverte d'un matériau souple, soit constituée d'un ensemble d'éléments rigides articulés les uns aux autres, le maintien en appui sur la plaque de cuisson étant assuré au moyens d'agrafes additionnelles, ce qui reste contraignant et peu commode.

On pourra encore se référer au document WO-2006/028625 A2 qui décrit encore un contour à âme en forme de bande ou formée d'un ensemble d'éléments rigides articulés les uns aux autres.

Dans une autre solution, on fabrique à la demande un contour de moule en silicone alimentaire ayant la forme définitive souhaitée. Ce contour est ensuite apposé sur la plaque de cuisson et permet de réaliser la pièce de pâtisserie ayant la forme correspondante.

Compte tenu de la grande souplesse du silicone, il est cependant nécessaire de fixer le contour à la plaque de cuisson pour éviter que sa forme ne se modifie sous l'effet de la pression exercée latéralement par le produit alimentaire retenu.

Cette fixation est assurée au moyen de cales externes additionnelles devant être fixées une à une sur la plaque de cuisson, autour du contour, ce qui est coûteux en temps et complexe à mettre en oeuvre dans la pratique.

L'arrière-plan technologique est également illustré par les documents US-3 635 642 A et FR 2 906 122 A1.

### OBJET DE L'INVENTION

Le but de l'invention est de proposer une solution pour remédier aux inconvénients ci-dessus.

### RESUME DE L'INVENTION

A cet effet, l'invention a pour objet un contour de moule destiné à être apposé sur une plaque culinaire telle qu'une plaque de cuisson pour retenir un produit alimentaire disposé sur cette plaque et à l'intérieur du contour, **caractérisé en ce qu**'il est constitué par un barreau souple comportant un corps en silicone alimentaire renfermant une âme en un matériau plastiquement déformable permettant de donner à ce barreau souple une courbure souhaitée, l'âme dudit corps ayant une forme de barre ou de fil.

Avec cette solution, le pâtissier peut directement placer le contour de moule sur la plaque, et le tordre de manière à lui donner la forme souhaitée. Grâce au choix d'un matériau plastiquement déformable constituant l'âme, le contour de moule conserve la forme qui lui a été imposée, lors du refroidissement ou durant toute la cuisson selon la pièce de pâtisserie réalisée, sans qu'il soit nécessaire de prévoir des cales additionnelles de maintien.

Par ailleurs, il n'est pas nécessaire d'utiliser une plaque culinaire métallique puisque des propriétés magnétiques ne sont pas nécessaires, de sorte que la plaque culinaire utilisée peut être elle-même en silicone alimentaire, en téflon ou autre.

L'invention a également pour objet un contour de moule tel que défini ci-dessus, dans lequel l'âme est un fil de laiton ou un fil d'aluminium recuit.

L'invention a également pour objet un contour de moule tel que défini ci-dessus, dans lequel le corps en silicone alimentaire a une section transversale délimitée par un contour définissant d'une part une face d'appui du barreau sur la plaque culinaire et d'autre part une face de retenue du produit alimentaire qui sont perpendiculaires l'une à l'autre.

L'invention a également pour objet un contour de moule tel que défini ci-dessus, dans lequel le corps présente une section transversale à contour rectangulaire ou carré.

L'invention a également pour objet un contour de moule tel que défini ci-dessus, dans lequel le corps présente une section transversale ayant une forme correspondant à celle de la lettre H.

L'invention a également pour objet un contour de moule tel que défini ci-dessus, comportant deux extrémités s'emboîtant l'une dans l'autre.

L'invention a également pour objet un contour de moule tel que défini ci-dessus, dans lequel l'âme dépasse de l'une des extrémités du corps en silicone alimentaire pour pouvoir s'engager dans l'autre extrémité du corps en silicone alimentaire.

### BREVE DESCRIPTION DES FIGURES

La figure 1 est une vue de dessus montrant schématiquement un contour de moule selon l'invention apposé sur une plaque culinaire plane;
La figure 2 est une vue en perspective montrant la structure générale du contour de moule selon l'invention apposé sur une plaque plane;
La figure 3 est une vue partielle montrant l'emboîtement des extrémités du barreau constituant le contour de moule selon l'invention;
La figure 4 est une vue partielle montrant une variante du contour de moule selon l'invention;
La figure 5 est une vue schématique illustrant la mise en oeuvre du contour de moule selon l'invention avec une plaque culinaire cylindrique pour réaliser une pièce de pâtisserie ayant une forme hélicoïdale.

### DESCRIPTION DETAILLEE DE L'INVENTION

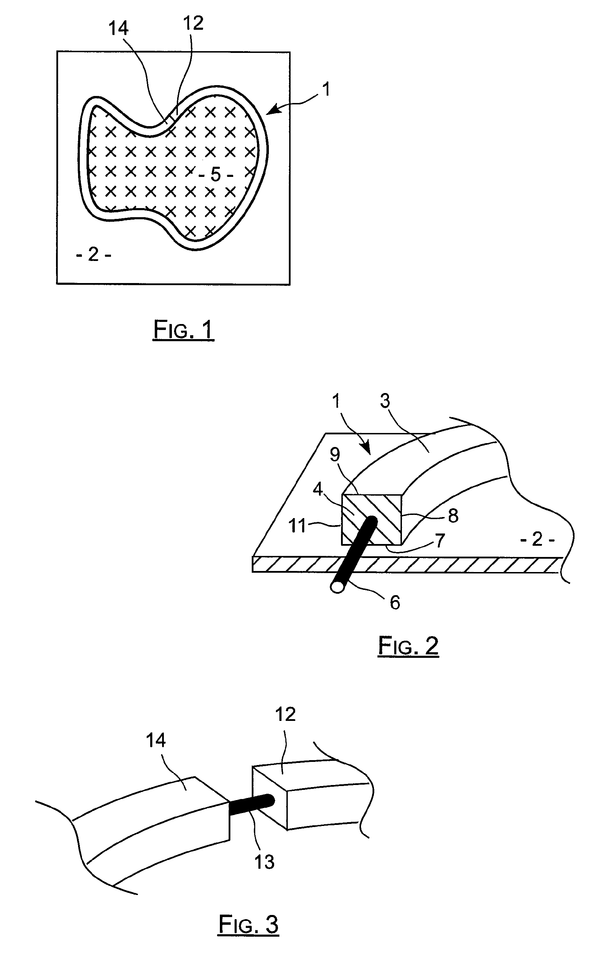

Comme visible dans la figure 1, le contour de moule selon l'invention repéré par 1, qui a une forme générale de barreau souple, est destiné à être apposé sur une plaque culinaire telle que la plaque de cuisson 2 plane à contour carré, en lui donnant une forme souhaitée.

Ce barreau 1 comporte un corps en silicone alimentaire 3 qui présente une section transversale 4 délimitée par un contour qui est carré dans l'exemple des figures 1 à 3, ce corps 3 renfermant une âme rigidifiante 6 qui est ici un fil de matériau plastiquement déformable tel qu'un fil de laiton ou un fil fabriqué en aluminium recuit. L'âme 6 a une forme de barre ou de fil, ce qui permet une déformation dans toutes les directions.

Comme illustré sur la figure 2, le fil constituant l'âme 6 est situé sensiblement au centre du corps 3 en silicone alimentaire, ce corps étant par exemple surmoulé sur l'âme 6 lors de la fabrication.

Le silicone utilisé pour le corps est un silicone alimentaire, c'est-à-dire capable d'une part de se détacher facilement de la majorité des produits alimentaires utilisables, tout en pouvant supporter des températures élevées telles que les températures de cuisson usuelles pour ces produits.

En ce qui concerne l'âme 6 que renferme le corps en silicone alimentaire, elle est fabriquée en matériau plastiquement déformable, c'est-à-dire un matériau dont la courbe de traction présente un domaine plastique très étendu, tel que du laiton ou de l'aluminium recuit.

Le contour de la section transversale 4 du barreau comporte un bord inférieur 7 coïncidant avec une face d'appui du barreau, prolongé par un bord latéral 8 coïncidant avec une face de retenue du produit alimentaire 5 et s'étendant à angle droit par rapport à la face inférieure. Ce contour carré est complété par un bord supérieur 9 correspondant à une face supérieure et un autre bord latéral 11 délimitant une face externe du barreau.

Chaque bord du contour de la section 4 mesure de l'ordre de quinze à vingt millimètres, le fil constituant l'âme 6 pouvant quant à lui être formé à partir d'une barre ou fil ayant un diamètre de l'ordre de quatre millimètres.

Le contour de moule peut être commercialisé sous forme d'un ruban enroulé sur un support de stockage, l'utilisateur le déroulant avant de l'apposer sur la plaque de cuisson en lui donnant la forme souhaitée.

Le barreau souple 1 est utilisé pour constituer un contour fermé, et présente avantageusement à cet effet des extrémités qui s'emboîtent l'une dans l'autre.

Comme représenté en figure 2, l'une des extrémités repérée par 12 est fabriquée de telle manière qu'une l'extrémité 13 du fil 6 formant âme dépasse de l'extrémité du corps en silicone. Complémentairement, l'autre extrémité du barreau, repérée par 14, est constituée par une extrémité de corps 3 en silicone présentant un trou central dépourvu d'âme, et dans lequel l'extrémité 13 de l'âme 6 peut venir s'engager.

Les extrémités 12 et 14 du barreau peuvent ainsi être emboîtées l'une dans l'autre en engageant l'extrémité 13 du fil 6 dans le trou de l'extrémité 14 du corps en silicone, de manière à constituer un contour fermé tel que celui de la figure 1.

Dans l'exemple de la figure 2, le corps en silicone alimentaire présente une section généralement rectangulaire, mais d'autres variantes de forme sont également possible.

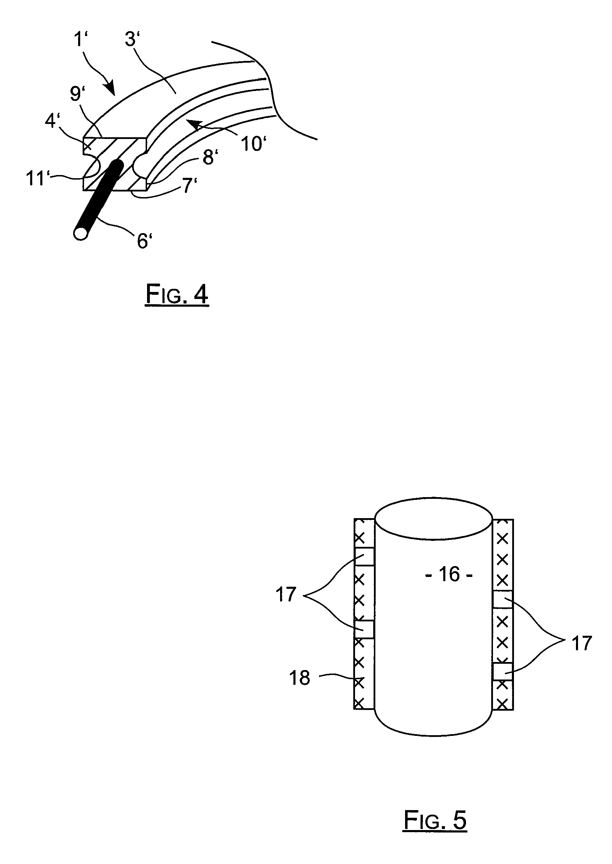

Ainsi, dans l'exemple de la figure 4, le barreau 1' comporte un corps en silicone 3' ayant en section transversale 4' une forme générale correspondant à la lettre H pour définir une face d'appui inférieure 7' similaire à celle de l'exemple de la figure 2, mais pour définir une face 8' de retenue du produit alimentaire qui s'étend perpendiculairement à la face d'appui 7' tout en comportant un retrait 10' hémicylindrique. La face supérieure 9' est elle aussi plane, et la face externe 11' présente elle aussi un retrait hémicylindrique du même type que celui de la face de retenue. L'âme ayant une forme de barre ou de fil est référencée 6'.

Cette section en H permet d'accroître encore la souplesse du barreau constituant le contour de moule selon l'invention en diminuant la quantité de silicone alimentaire qui le compose. Grâce aux retraits hémicylindriques des faces latérales 8' et 11', le barreau peut prendre des courbures importantes, voire anguleuses, tout en assurant que sa face inférieure reste en appui sur la plaque de cuisson.

Dans l'exemple des figures 1 à 4, le barreau souple selon l'invention est utilisé sur une plaque de cuisson essentiellement plane, mais il peut aussi être utilisé avec des plaques culinaires non planes.

Dans l'exemple de la figure 5, le barreau selon l'invention est utilisé avec une plaque cylindrique pour la réalisation d'une forme hélicoïdale en sucre caramélisé. Dans ce cas, la plaque culinaire qui est repérée par 16 a une forme généralement cylindrique, et le barreau souple repéré par 17 est appliqué à la face externe de celle-ci selon une hélicoïde.

Le sucre caramélisé repéré par 18 est ensuite versé sur la plaque cylindrique, entre les portions du barreau souple formant le contour, de telle manière qu'il se solidifie au contact de cette plaque cylindrique, pour constituer un motif hélicoïdal. Une fois que tout le sucre caramélisé a été déposé et est complètement refroidi, le barreau souple peut être décollé de la plaque cylindrique, et la structure de sucre dégagée de la plaque cylindrique qu'elle entoure.

## Revendications

1. Contour de moule (1 ; 1' ; 17) destiné à être apposé sur une plaque culinaire telle qu'une plaque de cuisson (2 ; 16) pour retenir un produit alimentaire (5 ; 18) disposé sur cette plaque et à l'intérieur du contour (1 ; 1' ; 17), **caractérisé en ce qu'**il est constitué par un barreau souple (1 ; 1'; 17) comportant un corps en silicone alimentaire (3 ; 3') renfermant une âme (6 ; 6') en un matériau plastiquement déformable permettant de donner à ce barreau souple (1 ; 1' ; 17) une courbure souhaitée, l'âme (6 ; 6') dudit corps ayant une forme de barre ou de fil.

2. Contour de moule selon la revendication 1, dans lequel l'âme (6 ; 6') est un fil de laiton ou un fil d'aluminium recuit.

3. Contour de moule selon la revendication 1 ou 2, dans lequel le corps (3 ; 3') en silicone alimentaire a une section transversale (4 4') délimitée par un contour définissant d'une part une face d'appui (7 ; 7') du barreau sur la plaque culinaire (2 ; 2') et d'autre part une face de retenue (8 ; 8') du produit alimentaire (5 ; 18) qui sont perpendiculaires l'une à l'autre.

4. Contour de moule selon l'une des revendications 1 à 3, dans lequel le corps présente une section transversale (4) à contour rectangulaire ou carré.

5. Contour de moule selon l'une des revendications 1 à 3, dans lequel le corps présente une section transversale (4') ayant une forme correspondant à celle de la lettre H.

6. Contour de moule selon l'une des revendications 1 à 5, comportant deux extrémités (12, 14) s'emboîtant l'une dans l'autre.

7. Contour de moule selon la revendication 6, dans lequel l'âme (6) dépasse de l'une des extrémités du corps en silicone alimentaire (3 ; 3') pour pouvoir s'engager dans l'autre extrémité du corps en silicone alimentaire (3; 3').
